# EUROPEAN PATENT SPECIFICATION

(11) **EP 3 862 559 B1**
(45) Date of publication and mention of the grant of the patent: **18.10.2023**
(21) Application number: 20848779.3
(22) Date of filing: 30.10.2020
(51) Int. Cl.: F03D 7/04, F03D 7/02

(54) **CONTROL METHOD FOR A YAW BRAKING SYSTEM**
STEUERUNGSVERFAHREN FÜR EIN GIERBREMSSYSTEM
PROCÉDÉ DE COMMANDE POUR UN DISPOSITIF DE FREINAGE EN LACET

(30) Priority: 11.12.2019 CN 201911269049
(43) Date of publication of application: 11.08.2021
(73) Proprietor: XEMC Windpower Co. Ltd., Hunan 411102 (CN)
(72) Inventor: ZHANG, Xuewen, Hunan 411102 (CN); YANG, Xuebing, Hunan 411102 (CN); SONG, Xiaoping, Hunan 411102 (CN); LIU, Ming, Hunan 411102 (CN)
(74) Representative: M. Zardi & Co S.A.
(86) International application number: PCT/CN2020/125153
(87) International publication number: WO 2021/114943

(56) References cited:
- WO-A1-2005/015011
- CN-A- 106 499 745
- CN-A- 106 677 983
- CN-A- 106 677 983
- CN-A- 109 488 529
- CN-A- 109 488 529
- CN-A- 110 778 456
- CN-U- 201 443 465
- CN-U- 201 443 465
- CN-U- 208 793 159
- CN-U- 208 793 159
- US-A1- 2012 046 917

## Description

### TECHNICAL FIELD

The present disclosure relates to the field of wind turbine, in particular to a yaw braking system in wind turbine and a control method thereof.

### BACKGROUD

The wind turbine is always operating in complex conditions, including various abnormal conditions such as the power grid failures, storms, and abrupt changes of wind directions. Therefore, a yaw braking system and its control strategy are critical to the safety of the wind turbine under such conditions. When electrical network connection is lost, a prior yaw braking system in the wind turbine needs an uninterrupted power supply (UPS) of the wind turbine to supply power for keeping the wind turbine in a braking state. However, since the UPS power supply is limited in time, which is generally a few hours only, it is not capable of maintaining the power supply for a long time in the event of a long power failure, and, at this moment, if the hydraulic braking pressure drops in the event of abruptly changing wind directions, an electromagnetic brake of a yaw motor would enter a braking state due to de-energization, and a yaw drive system of the wind turbine, especially the yaw gear, may suffer a great impact, which brings a potential safety hazard to the wind turbine.

In addition, an upwind shutdown strategy is often adopted for an existing wind turbine under stormy or typhoon conditions where the yaw braking system is in a brake lock state, i. e., the hydraulic brake serves in a high-pressure brake state while the electromagnetic brake of the yaw motor serves in a braking state. At this moment, the wind turbine can only resist the storm by relying on strengths of its own components such as blades and towers, which requires main wind turbine factories to strengthen towers and blades in strength, thus increasing the cost of the whole wind turbine.

According to an anti-typhoon control method provided by the invention patent with the Chinese Patent Publication CN106677983A, which is granted with a corresponding Patent No.CN106677983B, by keeping the wind turbine in a free yaw state during a typhoon when electrical network connection is lost, a baneful influence caused by an excessive load on the wind turbine can be avoided. However, this scheme does not take into consideration that, if the yaw braking system turns on the brake to leave the wind turbine in the free yaw state, the yaw system will have a small friction torque at the wind turbine head and abrupt changes of wind directions will lead to the over speed and frequent passive yaws of the head, causing damages to yaw drive components of the wind turbine, or even twisting off cables. In addition, this control method relies on an UPS and a battery for power supply in the event of loss of electrical network connection, so that the free yaw state will end when the UPS or the battery run out, the electromagnetic brake of the yaw motor and the yaw hydraulic brake will return to the braking state, and the wind turbine will enter a brake locking state at this moment. If the wind direction changes during the period, and the wind turbine cannot yaw under such a circumstance, the wind turbine will bear quite a large load, thus leading to a safety risk.

Chinese utility model application CN201443465U discloses a wind facing device of a wind generating set which belongs to parts of the wind generating set, and is characterized in that a sensing-element wind vane is electrically connected to a processor of a yawing motor control circuit, the yawing motor is connected with a yawing planetary gear reducer and fixed on an engine room pedestal, an output gear of the yawing planetary gear reducer meshes with a yawing-bearing annular gear, the yawing-bearing annular gear is fixedly connected with a tower cylinder through a stepped-drum connecting piece, and a yawing-gear outer ring is fixed on the engine room pedestal. The change of wind direction is perceived by the wind vane, and transmitted to the processor of the yawing motor control circuit in the form of electrical signals, and a yawing command of clockwise or anticlockwise rotation is sent to the yawing motor by the processor after comparison.

Chinese utility model application CN208793159U discloses a wind generating set braking system that yaws, it includes oil feed control circuit I, oil return control circuit I, oil return control circuit II, oil feed control circuit II. During the high pressure braking, oil feed control circuit I switches on, and oil feed control circuit II, oil return control circuit I, oil return control circuit II close. During yawing, when the wind speed is higher than the system setting wind speed, oil feed control circuit I closes, oil return control circuit II closes, the return control line I is first switched on, and is not closed until the pressure of the yaw brake is equal to or lower than the set pressure of the pressure reducing valve in the oil feed control circuit II, and subsequently oil feed control circuit II switches on.

Chinese invention application CN109488529A discloses a wind turbine generator set and an intelligent anti-typhoon control method thereof. The intelligent anti-typhoon control method comprises the steps that the wind turbine generator set enters in an anti-typhoon mode when a command signal of entering in the anti-typhoon mode is received; and the wind turbine generator set stops and operates yawing and wind aligning, a prevailing wind direction of typhoon is taken as a control objective, and yawing and adjusting are carried out constantly to make the wind turbine generator set face the prevailing wind direction of the typhoon directly. The intelligent anti-typhoon control method can also comprise a stage of pre-untwisting, and the effectiveness of the control method can be taken into account when a wind indicator of the wind turbine generator set loses efficacy.

### SUMMARY

In order to solve the above-mentioned technical problems, the present disclosure provides a control method of a yaw braking system in a wind turbine according to claim 1.

The yaw braking system has a simple structure, as well as a control method thereof.

A technical scheme provided in the present disclosure to solve the above mentioned problems is: a control method of a yaw braking system in a wind turbine, wherein the yaw braking system in the wind turbine comprises a hydraulic braking system and an electromagnetic braking system; wherein the hydraulic braking system comprises a hydraulic station, a pipeline and a hydraulic brake which is installed on a nacelle bottom plate of the wind turbine and in contact with a yaw brake disc connected by bolts with a ring with gears of a yaw bearing and a tower top flange, with the hydraulic brake being able to clamping the yaw brake disc under pressure to enable the yaw braking of a head of the wind turbine; wherein the nacelle bottom plate is connected by bolts with a ring without gears of the yaw bearing, and the hydraulic brake is connected with the hydraulic station via the pipeline; and wherein the electromagnetic brake system comprises a yaw motor, a yaw reducer and an electromagnetic brake, wherein the electromagnetic brake is installed inside the yaw motor to enable the rotor braking in the yaw motor, a yaw motor output shaft is connected with an input shaft of the yaw reducer, and an output gear of the yaw reducer is engaged with a gear ring of the yaw bearing;
wherein the hydraulic station comprises a check valve, a first solenoid valve, an oil tank, and several circuits between an hydraulic brake oil outlet and the oil tank, wherein pressurized oil flows from a hydraulic pump to the check valve, and to the first solenoid valve in sequence, and finally enters the hydraulic brake; among the several circuits between the hydraulic brake oil outlet and the oil tank, only one circuit equipped with a counterbalance valve can overflow in the event of de-energization, and the circuit equipped with the counterbalance valve also has a third solenoid valve provided therein, wherein a set relief of the counterbalance valve is lower than a braking pressure applied by the hydraulic braking system of the wind turbine in normal operation; other circuits have second solenoid valves provided inside;
wherein the hydraulic braking system further comprises an accumulator controlled by the solenoid valve which is in fluid communication with the hydraulic brake in the event of the hydraulic station de-energization, thereby ensuring the braking system remains at low pressure when power is lost;
wherein the electromagnetic brake installed in the yaw motor is normally open, the electromagnetic brake installed in the yaw motor being in a braking state when energized, and the brake is released when de-energized;
wherein the electromagnetic brake comprises a yoke, a coil, a friction plate, an armature plate, a shrapnel and an armature cam, wherein the armature cam is connected with the motor rotor shaft through a shaft key, the armature plate is integrated with the armature cam through the shrapnel, the coil is located within the yoke, and the friction plate is located between the coil and the armature plate; when the electromagnetic brake is powered on, the coil is energized to pull in the armature plate which then overcomes an elastic force of the shrapnel to contact the friction plate for braking;
wherein the control method comprises:
   In Step 1, determine whether the wind turbine is operating in a stormy condition, and if so, proceed to Step 2 to enter a storm control mode; and if not, proceed to normal operation;
   In Step 2, stopping the wind turbine from producing power, and before the twisted cable value exceeds the limit, the wind turbine will untwist the cable in advance and yaw leeward;
   wherein in Step 2, the wind turbine untwisting in advance adopts a method of "minimum twisted cable leeward yaw", and a control method flow provides:
      2-1) Obtaining a current twist cable angle α and a deviation angle β between the head and a wind direction, wherein the current cable twisting angle α has a sign symbol, a negative left cable twisting value indicates a right yaw in an untwisting direction, a positive right cable twisting value indicates a left yaw in the untwisting direction, and the deviation angle β between the head and the wind direction defines a rotation angle, which is positive without a sign symbol, required if the head rotates clockwise to reach a same direction as the wind direction;
      2-2) Determining whether |α+β|>|α-(360-β)| is true, and if so, the yaw goes left by |α-(360-β| degrees, or otherwise goes right by | α+β | degrees;
      2-3) Stopping the yaw when detecting during the yaw that the value of the deviation angle β is less than a minimum allowable yaw angle deviation A and the current cable twisting angle α ≤ 180;In Step 3, determine whether an electrical network connection is lost, if electrical network connection is not lost, proceed to Step 4, and if electrical network connection is lost, proceed to Step 5;
   In Step 4, the wind turbine starts an active leeward yaw, keeping the head in a same direction as the wind direction;
   In Step 5, adopt a power-down braking mode for the wind turbine to enable a passive yaw with damping for the wind turbine.

According to the above-mentioned control method of the yaw braking system of the wind turbine, in Step 1, it is determined to enter the storm control mode when manually entering the storm control mode or when determining that a wind speed exceeds a value S in time T.

According to the above mentioned control method of the yaw braking system of the wind turbine, wherein: in Step 5, when electrical network connection is lost, the , the first solenoid valve, the second solenoid valve and the third solenoid valve in the hydraulic station and the electromagnetic brake in the yaw motor are powered by a UPS in a short time after loss of the electrical network connection to maintain their original states; if a duration of loss of electrical network connection exceeds a set value T_{d}, , the first solenoid valve, the second solenoid valve and the third solenoid valve in the hydraulic station and the electromagnetic brake in the yaw motor will be all de-energized, and a pressure of the hydraulic brake drops to the relief set by the counterbalance valve. At this moment, the wind turbine is operating in the passive yaw state with damping.

The present disclosure is beneficial in:
1 According to the yaw braking system provided in the present disclosure, among several circuits between an hydraulic brake output terminal and the oil tank in the hydraulic brake system, only one circuit equipped with a counterbalance valve can overflow in the event of de-energization, and the counterbalance valve has a set relief lower than a braking pressure applied by the hydraulic braking system of the wind turbine in normal operation, in order to keep the yaw hydraulic brake system under a low pressure in the event of power failure and to maintain the pressure by using an accumulator.
2 According to the yaw braking system provided in the present disclosure, the yaw motor adopts an electromagnetic brake that is in a braking state when energized, so that the yaw system can eliminate the dependency on the UPS power supply in the event of loss of electrical network connection and enable the long-time passive yaw with damping, thus effectively reducing the load imposed on the wind turbine under a stormy condition, preventing the yaw gear from impacts caused by external loads, and improving the safety of the wind turbine.
3 According to the control method provided in the present disclosure, the cable is untwisted in advance before the storm, which may reduce the risk of twisting the cable off due to the passive yaw under the stormy condition, thereby improving the safety of the passive yaw of the wind turbine when the electricity network is lost.

### BRIEF DESCRIPTION OF THE DRAWINGS

Fig. 1 is a schematic structural diagram of a yaw braking system in a wind turbine according to the present disclosure.
Fig. 2 is a structural concept diagram of a hydraulic station according to the present disclosure.
Fig. 3 is a schematic structural diagram of an electromagnetic brake that is in a braking state when energized according to the present disclosure.
Fig. 4 is a control flow chart of a power failure braking mode in a control method according to the present disclosure.
Fig. 5 is a control flow chart of the control method under a stormy condition according to the present disclosure.
Fig. 6 is a relationship diagram of a wind direction, a cable twisting value and a yaw angle deviation defined in the control method according to the present disclosure.
Fig. 7 is a flow chart of the method of "minimum twisted cable value leeward yaw" according to the present disclosure.

Reference numbers in the figures: 1, nacelle bottom plate; 2, yaw bearing; 2.2, ring (with gears) of the yaw bearing; 2.1, external ring of the yaw bearing; 3, yaw reducer; 4, yaw motor; 5, hydraulic brake; 6, yaw brake disc; 7, tower top flange; 8, check valve; 9, solenoid valve I; 10, pipeline; 11, solenoid valve II; 12, solenoid valve III; 13, accumulator; 14, counterbalance valve; 15, oil tank; 16, hydraulic station; 17, electromagnetic brake; 17.1, yoke; 17.2, coil; 17.3 friction plate; 17.4 armature plate; 17.5, shrapnel armature; 17.6, armature cam; 18, motor rotor shaft.

### DETAILED DESCRIPTION

The present disclosure will be further described with reference to figures and embodiments below.

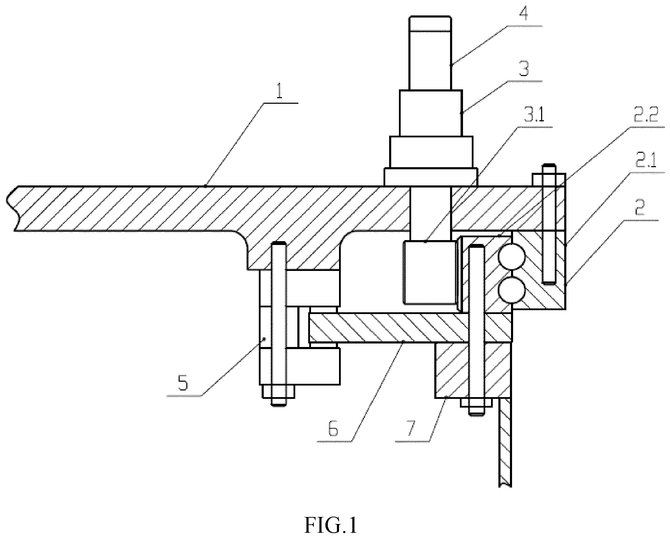

As shown in Fig. 1, a yaw braking system in a wind turbine includes a hydraulic braking system and an electromagnetic braking system; wherein the hydraulic braking system includes a hydraulic station 16, a pipeline 10 and a hydraulic brake 5 which is installed on a nacelle bottom plate 1 of the wind turbine and in contact with a yaw brake disc 6 connected by bolts with a ring 2.2 (with gears) of a yaw bearing and a tower top flange 7, with the hydraulic brake 5 being able to clamping the yaw brake disc 6 under pressure to enable the yaw braking of the wind turbine head; wherein the nacelle bottom plate 1 is connected by bolts with a ring 2.1 (without gears) of the yaw bearing, and the hydraulic brake 5 is connected with the hydraulic station 16 via the pipeline 10; and wherein the electromagnetic brake system includes a yaw motor 4, a yaw reducer 3 and an electromagnetic brake 17, wherein the electromagnetic brake 17 is installed inside the yaw motor 4 to enable the rotor braking in the yaw motor 4, an output shaft of the yaw motor 4 is connected with an input shaft of the yaw reducer 3, and an output gear of the yaw reducer 3 is engaged with a gear ring of the yaw bearing.

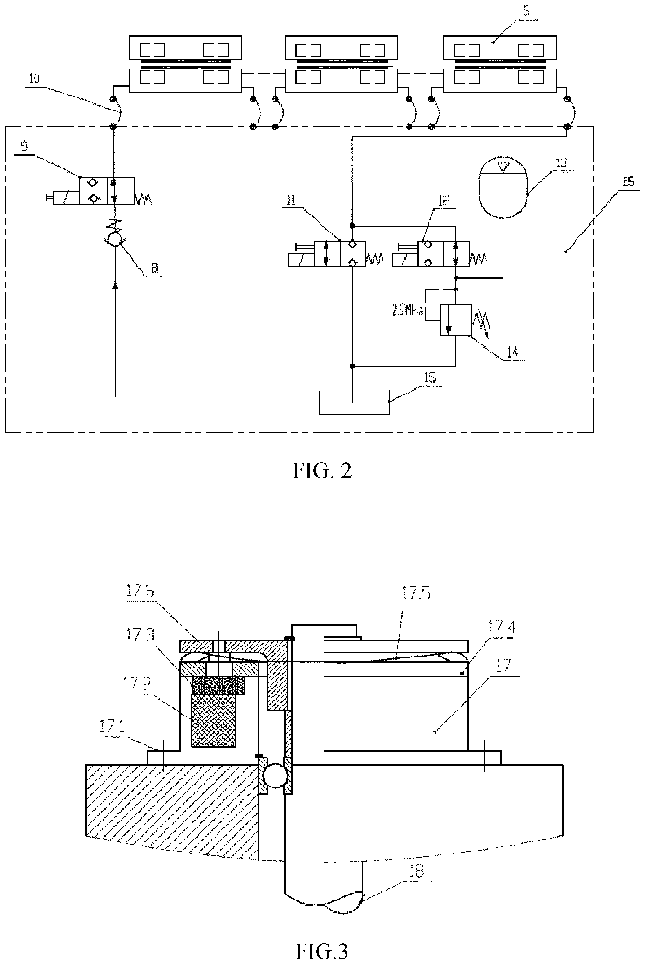

As shown in Fig. 2, the hydraulic station 16 includes a check valve 8, a solenoid valve I 9, an oil tank 15, and several circuits between an hydraulic brake 5 output terminal and the oil tank 15, wherein pressurized oil flows from a hydraulic pump to the check valve 8, and to the solenoid valve I 9 in sequence, and finally enters the hydraulic brake 5. Among the several circuits between the hydraulic brake 5 oil outlet and the oil tank 15, only one circuit equipped with a counterbalance valve 14 can overflow in the event of de-energization, and the circuit equipped with the counterbalance valve 14 also has a solenoid valve III 12 provided therein, wherein a set relief of 25 Bar of the counterbalance valve 14 is lower than a braking pressure of 160 Bar applied by the hydraulic braking system of the wind turbine in normal operation. There is a solenoid valve II 11 installed in one of the other circuits.

The hydraulic braking system further includes an accumulator 13 controlled by the solenoid valve and connected with the hydraulic brake 5, which is connected with the hydraulic brake 5 in the event that the hydraulic station 16 loses power, thereby ensuring a pressure staying low for the hydraulic brake system.

As shown in Fig. 3, the electromagnetic brake 17 installed in the yaw motor 4 is normally open i.e., the brake enters a braking state when energized, and releases at the time of being de-energized. The electromagnetic brake 17 includes a yoke 17.1, a coil 17.2, a friction plate 17.3, an armature plate 17.4, a shrapnel 17.5 and an armature cam 17.6, wherein the armature cam 17.6 is connected with the motor rotor shaft through a shaft key, the armature plate 17.4 is integrated with the armature cam 17.6 through the shrapnel 17.5, the coil 17.2 is located within the yoke 17.1, and the friction plate 17.3 is located between the coil 17.2 and the armature plate 17.4. When the electromagnetic brake 17 is powered on, the coil 17.2 is energized to pull in the armature plate 17.4 which then overcomes a elastic force of the shrapnel 17.5 to contact the friction plate 17.3 for braking.

When electrical network connection is ok, if the wind turbine needs to have its head stay in a braking state: On one hand, the solenoid valve I 9 of the hydraulic station 16 opens due to de-energization, and the pressurized oil flows from a hydraulic pump to the check valve 8, to the solenoid valve I 9, and finally to the hydraulic brake 5. At the same time, the solenoid valve II 11 closes due to de-energization, and the solenoid valve III 12 closes when energized. When the pressure reaches 180 Bar, the pump stops pressurizing. At this moment, the hydraulic brake 5 clamps the yaw brake disc 6 under the pressure. Since the yaw brake disc 6 is connected by bolts with the ring 2.2 (with gears) of the yaw bearing and the tower top flange 7, the head yaw braking is achieved for the wind turbine. On the other hand, the electromagnetic brake 17 is powered on, the coil 17.2 of the electromagnetic brake 17 is energized to pull in the armature plate 17.4 which then contact the friction plate 17.3 for braking the motor rotor. As the output gear of the reducer 3 is engaged with the gear ring of the yaw bearing, the wind turbine head is indirectly braked, which further increases the braking torque of the wind turbine.

When electrical network connection is ok, if the wind turbine needs to have its head yaw: the yaw motor 4 starts, its electromagnetic brake 17 releases the brake due to de-energization and the solenoid valve I 9 of the hydraulic station 16 closes when energized. At the same time, the solenoid valve II 11 closes due to de-energization, and the solenoid valve III 12 opens due to de-energization. The pressurized oil in the hydraulic brake 5 overflows from the counterbalance valve 14 back to the oil tank 15. Since the relief of the counterbalance valve 14 is set as 25 Bar, the current pressure in the hydraulic brake 5 drops to 25 Bar. As a result, the wind turbine starts the passive yaw with damping.

When electrical network connection is lost, the solenoid valves I 9, II 11 and III 12 of the hydraulic station 16 are all de-energized, and the pressure of the hydraulic brake 5 drops to the set relief by the counterbalance valve 14. At this moment, the electromagnetic brake 17 also releases due to de-energization, and the wind turbine is in a passive yaw state with damping. Since the yaw motor 4 is not in the brake state, its output pinion 3.1 can rotate so as to reduce the impact of external load imposed on the ring 2.2 (with gears) of the yaw bearing.

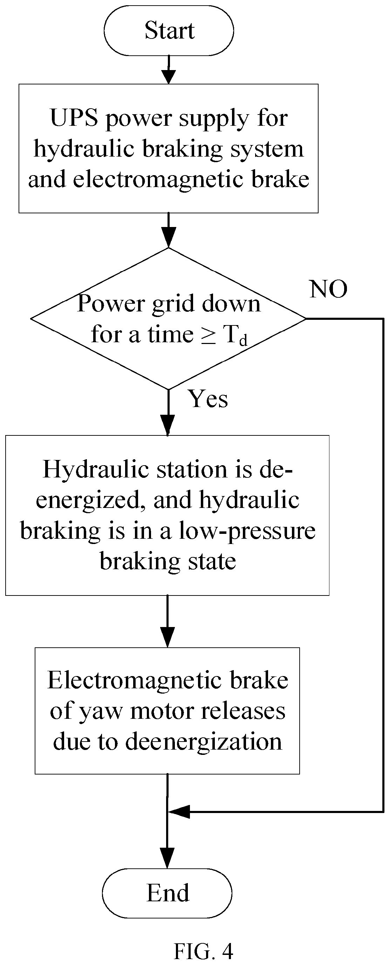

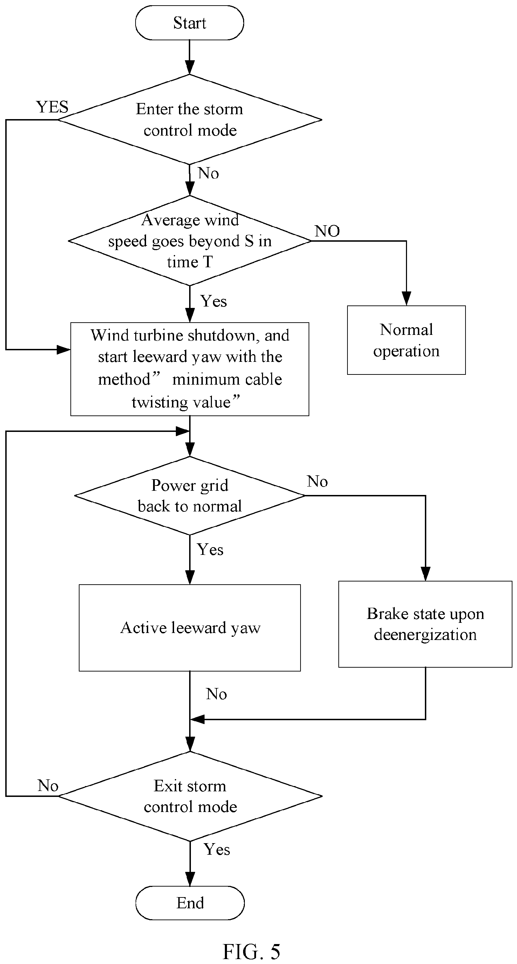

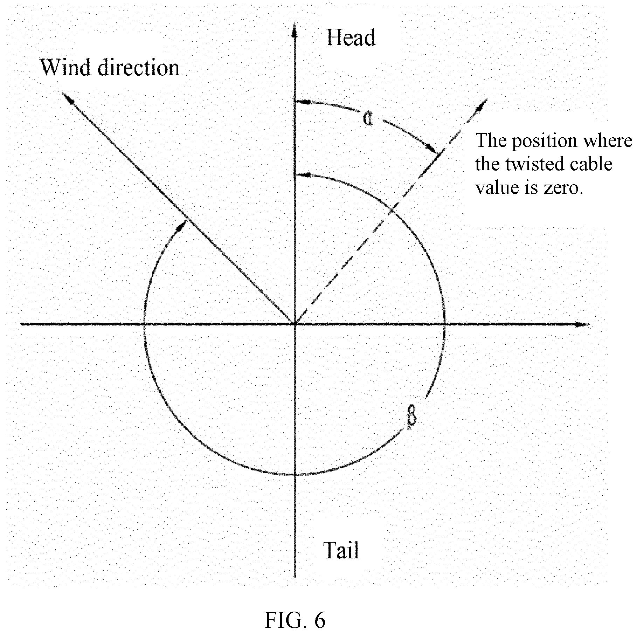

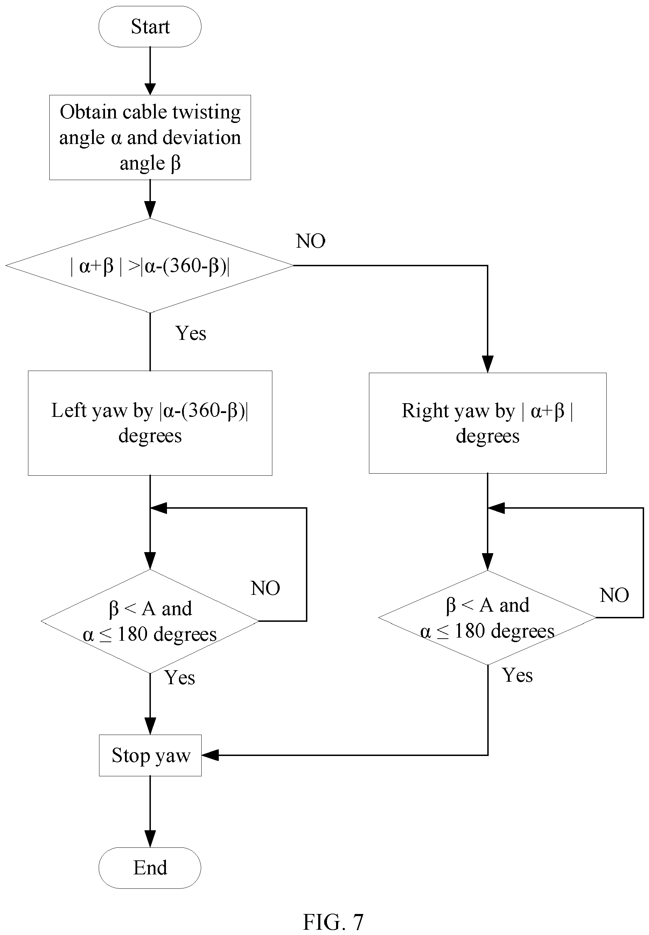

As shown in Figs. 4-7, a control method of the yaw braking system in the wind turbine is provided, including:
In Step 1, determining whether the wind turbine is operating in a stormy condition, and if so, proceeding to Step 2 to enter a storm control mode; and if not, proceeding to Step 3;
Wherein it is determined to enter the storm control mode when manually entering the storm control mode or when determining that a wind speed exceeds a value S in time T.
In Step 2, stopping the wind turbine from producing power, and before the twisted cable value exceeds the limit, the wind turbine will untwist the cable in advance and yaw leeward;
Wherein the cable is untwisted in advance and the method of "minimum twisted cable leeward yaw" is adopted for the wind turbine for a leeward yaw, with the control method flow as follows:
   2-1) Obtaining a current twist cable angle α and a deviation angle β between the head and the wind direction, wherein the cable twisting angle α has a sign symbol, a left cable twisting value is negative (indicating a right yaw in the untwisting direction), a right cable twisting value is positive (indicating a left yaw in the untwisting direction), and the deviation angle β between the head and the wind direction defines an rotation angle, which is positive without a sign symbol, required if the head rotates clockwise to reach a same direction as the wind direction.
   2-2) Determining whether |α+β|>|α-(360-β)| is true, and if so, the yaw goes left by |α-(360-β)| degrees, or otherwise goes right by | a+β | degrees.
   2-3) Stopping the yaw when it is detected that during the yaw that the β value is less than the minimum allowable yaw angle deviation A and α ≤ 180.

In Step 3, determining whether the power grid is powered down, if the power grid works normally but not powered down, proceeding to Step 4, and if the power grid is powered down, proceeding to Step 5.

In Step 4, the wind turbine starts an active leeward yaw, keeping its head in a same direction as the wind.

In Step 5, the wind turbine adopts the power-down braking mode and enters the passive yaw with damping.

When electrical network connection is lost, the solenoid valves I 9, II 11 and III 12 in the hydraulic station 16 and the electromagnetic brake 17 in the yaw motor 4 are powered by the UPS in a short time after loss of electrical network connection to maintain their original states; if the duration of loss of electrical network connection exceeds a set value T_{d}, the solenoid valves I 9, II 11 and III 12 in the hydraulic station 16 and the electromagnetic brake 17 in the yaw motor 4 will be all de-energized, and a pressure of the hydraulic brake 5 drops to the relief set by the counterbalance valve 14. At this moment, the wind turbine stays in a passive yaw state with damping.

## Claims

1. A control method of a yaw braking system in a wind turbine, wherein the yaw braking system in the wind turbine comprises a hydraulic braking system and an electromagnetic braking system; wherein the hydraulic braking system comprises a hydraulic station (16), a pipeline (10) and a hydraulic brake (5) which is installed on a nacelle bottom plate (1) of the wind turbine and in contact with a yaw brake disc (6) connected by bolts with a ring with gears (2.2) of a yaw bearing (2) and a tower top flange (7), with the hydraulic brake (5) being able to clamping the yaw brake disc (6) under pressure to enable the yaw braking of a head of the wind turbine; wherein the nacelle bottom plate (1) is connected by bolts with a ring without gears of the yaw bearing (2), and the hydraulic brake (5) is connected with the hydraulic station (16) via the pipeline (10); and wherein the electromagnetic brake system comprises a yaw motor (4), a yaw reducer (3) and an electromagnetic brake (17), wherein the electromagnetic brake (17) is installed inside the yaw motor (17) to enable the rotor braking in the yaw motor (17), a yaw motor output shaft is connected with an input shaft of the yaw reducer (3), and an output gear of the yaw reducer (3) is engaged with a gear ring of the yaw bearing (2);
wherein the hydraulic station (16) comprises a check valve (8), a first solenoid valve (9), an oil tank (15), and several circuits between an hydraulic brake oil outlet and the oil tank (15), wherein pressurized oil flows from a hydraulic pump to the check valve (8), and to the first solenoid valve (9) in sequence, and finally enters the hydraulic brake (5); among the several circuits between the hydraulic brake oil outlet and the oil tank (15), only one circuit equipped with a counterbalance valve (14) can overflow in the event of de-energization, and the circuit equipped with the counterbalance valve (14) also has a third solenoid valve (12) provided therein, wherein a set relief of the counterbalance valve (14) is lower than a braking pressure applied by the hydraulic braking system of the wind turbine in normal operation; other circuits have second solenoid valves (11) provided inside;
wherein the hydraulic braking system further comprises an accumulator (13) controlled by the solenoid valve which is in fluid communication with the hydraulic brake (5) in the event of the hydraulic station de-energization, thereby ensuring the braking system remains at low pressure when power is lost;
wherein the electromagnetic brake (17) installed in the yaw motor (4) is normally open, the electromagnetic brake (17) installed in the yaw motor (4) being in a braking state when energized, and the brake is released when de-energized;
wherein the electromagnetic brake (17) comprises a yoke (17.1), a coil (17.2), a friction plate (17.3), an armature plate (17.4), a shrapnel (17.5) and an armature cam (17.6), wherein the armature cam (17.6) is connected with the motor rotor shaft (18) through a shaft key, the armature plate (17.4) is integrated with the armature cam (17.6) through the shrapnel (17.5), the coil (17.2) is located within the yoke (17.1), and the friction plate (17.3) is located between the coil (17.2) and the armature plate (17.4); when the electromagnetic brake (17) is powered on, the coil (17.2) is energized to pull in the armature plate (17.4) which then overcomes an elastic force of the shrapnel (17.5) to contact the friction plate (17.3) for braking;
wherein the control method comprises:
In a Step 1, determining whether the wind turbine is operating in a stormy condition, and if so, proceeding to a Step 2 to enter a storm control mode;
In Step 2, stopping the wind turbine from producing power, and before a twisted cable value exceeds the limit, the wind turbine will untwist the cable in advance and yaw leeward;
wherein in Step 2, the wind turbine untwisting in advance adopts a method of "minimum twisted cable leeward yaw", and the control method further provides:
2-1) Obtaining a current twist cable angle α and a deviation angle β between the head and a wind direction, wherein the current cable twisting angle α has a sign symbol, a negative left cable twisting value indicates a right yaw in an untwisting direction, a positive right cable twisting value indicates a left yaw in the untwisting direction, and the deviation angle β between the head and the wind direction defines a rotation angle, which is positive without a sign symbol, required if the head rotates clockwise to reach a same direction as the wind direction;
2-2) Determining whether |α+β|>|α-(360-β)| is true, and if so, the yaw goes left by |α-(360-β)| degrees, or otherwise goes right by | α+β | degrees;
2-3) Stopping the yaw when detecting during the yaw that the value of the deviation angle β is less than a minimum allowable yaw angle deviation A and the current cable twisting angle α ≤ 180;
In a Step 3, determining whether an electrical network connection is lost, if electrical network connection is not lost, proceed to a Step 4, and if electrical network connection is lost, proceed to a Step 5;
In Step 4, the wind turbine starting an active leeward yaw, and keeping the head in a same direction as the wind direction;
In Step 5, the wind turbine adopts a power-down braking mode and enters a passive yaw with damping.

2. The control method of the yaw braking system of the wind turbine according to claim 1 wherein, in Step 1, it is determined to enter the storm control mode when manually entering the storm control mode or when determining that a wind speed exceeds a value S in time T.

3. The control method of the yaw braking system of the wind turbine according to claim 1 wherein, in Step 5, when electrical network connection is lost, the first solenoid valve (8), the second solenoid valve (11) and the third solenoid valve (12) in the hydraulic station (16) and the electromagnetic brake (17) in the yaw motor (4) are powered by an UPS in a short time after loss of electrical network connection to maintain their original states; if the duration of loss of electrical network connection exceeds a set value Td, the first solenoid valve (8), the second solenoid valve (11) and the third solenoid valve (12) in the hydraulic station (16) and the electromagnetic brake (17) in the yaw motor (17) will be all de-energized, and a pressure of the hydraulic brake (5) drops to the relief set by the counterbalance valve(14), at this moment, the wind turbine is operating in the passive yaw state with damping.

## Patentansprüche

1. Steuerungsverfahren für ein Gierbremssystem in einer Windturbine, wobei das Gierbremssystem in der Windturbine ein Hydraulikbremssystem und ein elektromagnetisches Bremssystem umfasst; wobei das Hydraulikbremssystem eine Hydraulikstation (16), eine Rohrleitung (10) und eine Hydraulikbremse (5) umfasst, die an einer Gondelbodenplatte (1) der Windturbine installiert ist und in Kontakt mit einer Gierbremsscheibe (6) steht, die durch Bolzen mit einem Ring mit Zahnrädern (2.2) eines Gierlagers (2) und einem Turmoberseitenflansch (7) verbunden ist, wobei die Hydraulikbremse (5) in der Lage ist, die Gierbremsscheibe (6) unter Druck zu klemmen, um das Gierbremsen eines Kopfes der Windturbine zu ermöglichen; wobei die Gondelbodenplatte (1) durch Bolzen mit einem Ring ohne Zahnräder des Gierlagers (2) verbunden ist und die Hydraulikbremse (5) über die Rohrleitung (10) mit der Hydraulikstation (16) verbunden ist; und wobei das elektromagnetische Bremssystem einen Giermotor (4), einen Gierreduzierer (3) und eine elektromagnetische Bremse (17) umfasst, wobei die elektromagnetische Bremse (17) innerhalb des Giermotors (4) installiert ist, um das Rotorbremsen in dem Giermotor (4) zu ermöglichen, eine Giermotor-Ausgangswelle mit einer Eingangswelle des Gierreduzierers (3) verbunden ist und ein Ausgangszahnrad des Gierreduzierers (3) mit einem Zahnkranz des Gierlagers (2) in Eingriff ist;
wobei die Hydraulikstation (16) ein Rückschlagventil (8), ein erstes Solenoidventil (9), einen Öltank (15) und mehrere Schaltkreise zwischen einem Hydraulikbremsölauslass und dem Öltank (15) umfasst, wobei unter Druck stehendes Öl von einer Hydraulikpumpe nacheinander zu dem Rückschlagventil (8) und zu dem ersten Solenoidventil (9) fließt und schließlich in die Hydraulikbremse (5) eintritt; von den mehreren Schaltkreisen zwischen dem Hydraulikbremsölauslass und dem Öltank (15) nur ein Schaltkreis, der mit einem Ausgleichsventil (14) ausgestattet ist, im Falle einer Nichtversorgung mit Energie überlaufen kann, und der Schaltkreis, der mit dem Ausgleichsventil (14) ausgestattet ist, auch ein darin vorgesehenes drittes Solenoidventil (12) aufweist, wobei eine eingestellte Entlastung des Ausgleichsventils (14) niedriger ist als ein Bremsdruck, der von dem Hydraulikbremssystem der Windturbine im Normalbetrieb angelegt wird; andere Schaltkreise im Inneren vorgesehene zweite Solenoidventile (11) aufweisen;
wobei das Hydraulikbremssystem ferner einen durch das Solenoidventil gesteuerten Akkumulator (13) umfasst, der im Falle der Nichtversorgung mit Energie der Hydraulikstation in Fluidverbindung mit der Hydraulikbremse (5) steht, wodurch sichergestellt wird, dass das Bremssystem bei einem Stromausfall auf niedrigem Druck bleibt;
wobei die in dem Giermotor (4) installierte elektromagnetische Bremse (17) normalerweise offen ist, wobei sich die in dem Giermotor (4) installierte elektromagnetische Bremse (17) in einem Bremszustand befindet, wenn sie mit Energie versorgt ist, und die Bremse gelöst ist, wenn sie nicht mit Energie versorgt ist;
wobei die elektromagnetische Bremse (17) ein Joch (17.1), eine Spule (17.2), eine Reibungsplatte (17.3), eine Ankerplatte (17.4), ein Schrapnell (17.5) und einen Ankernocken (17.6) umfasst, wobei der Ankernocken (17.6) mit der Motorrotorwelle (18) durch einen Wellenschlüssel verbunden ist, die Ankerplatte (17.4) mit dem Ankernocken (17.6) durch das Schrapnell (17.5) integriert ist, die Spule (17.2) innerhalb des Jochs (17.1) angeordnet ist und die Reibungsplatte (17.3) zwischen der Spule (17.2) und der Ankerplatte (17.4) angeordnet ist; wenn die elektromagnetische Bremse (17) unter Strom steht, wird die Spule (17.2) mit Energie versorgt, um die Ankerplatte (17.4) anzuziehen, die dann eine elastische Kraft des Schrapnells (17.5) überwindet, um die Reibungsplatte (17.3) zum Bremsen zu kontaktieren;
wobei das Verfahren umfasst:
In einem Schritt 1 Bestimmen, ob die Windturbine in einem stürmischen Zustand betrieben wird, und wenn dies der Fall ist, Weitergehen zu einem Schritt 2, um in einen Sturm-steuerungsmodus einzutreten;
In Schritt 2 Stoppen der Windturbine bei der Stromerzeugung, und bevor ein Verdrehungskabelwert den Grenzwert überschreitet, wird die Windturbine das Kabel im Vorhinein entdrehen und nach Lee gieren;
wobei in Schritt 2 das im Vorhinein Entdrehen der Windturbine ein Verfahren des "minimalen Verdrehtes-Kabel-nach-Lee-Gierens" (minimum twisted cable leeward yaw) anwendet und das Steuerungsverfahren ferner vorsieht:
2-1) Erhalten eines aktuellen Verdrehungskabelwinkels α und eines Abweichungswinkels β zwischen dem Kopf und einer Windrichtung, wobei der aktuelle Kabelverdrehungswinkel α ein Vorzeichensymbol hat, ein negativer linker Kabelverdrehungswert ein rechtes Gieren in einer Aufdrehrichtung anzeigt, ein positiver rechter Kabelverdrehungswert ein linkes Gieren in der Aufdrehrichtung anzeigt, und der Abweichungswinkel β zwischen dem Kopf und der Windrichtung einen Drehwinkel definiert, der ohne ein Vorzeichensymbol positiv ist, der erforderlich ist, wenn der Kopf sich im Uhrzeigersinn dreht, um eine gleiche Richtung wie die Windrichtung zu erreichen;
2-2) Bestimmen, ob |α+β|> |α-(360-β)| wahr ist, und wenn ja, geht das Gieren um |α-(360-β)| Grad nach links, oder es geht andernfalls um |α+β| Grad nach rechts.
2-3) Stoppen des Gierens, wenn während des Gierens festgestellt wird, dass der Wert des Abweichungswinkels β geringer ist als eine minimal zulässige Gierwinkelabweichung A und der aktuelle Kabelverdrehungswinkel α ≤ 180;
In einem Schritt 3, Bestimmen, ob eine elektrische Netzwerkverbindung unterbrochen ist, wenn die elektrische Netzwerkverbindung nicht unterbrochen ist, Fortfahren mit einem Schritt 4, und wenn die elektrische Netzwerkverbindung unterbrochen ist, Fortfahren mit einem Schritt 5;
In Schritt 4 beginnt die Windturbine eine aktive Gier nach Lee und hält den Kopf in der gleichen Richtung wie der Wind;
In Schritt 5 nimmt die Windturbine einen Stromversorgungsunterbrechungs-Bremsmodus an und tritt in einen passiven Giermodus mit Dämpfung ein.

2. Steuerungsverfahren für das Gierbremssystem der Windturbine nach Anspruch 1, wobei in Schritt 1 bestimmt wird, in den Sturmsteuerungsmodus einzutreten, wenn manuell in den Sturmsteuerungsmodus eingetreten wird oder wenn bestimmt wird, dass eine Windgeschwindigkeit einen Wert S in der Zeit T überschreitet.

3. Steuerungsverfahren für das Gierbremssystem der Windturbine nach Anspruch 1, wobei in Schritt 5, wenn die elektrische Netzwerkverbindung unterbrochen ist, das erste Solenoidventil (8), das zweite Solenoidventil (11) und das dritte Solenoidventil (12) in der Hydraulikstation (16) und die elektromagnetische Bremse (17) in dem Giermotor (4) in einer kurzen Zeit nach dem Verlust der elektrischen Netzwerkverbindung von einer USV mit Energie versorgt werden, um ihre ursprünglichen Zustände beizubehalten; wenn die Dauer des Verlustes der elektrischen Netzwerkverbindung einen eingestellten Wert Td überschreitet, werden das erste Solenoidventil (8), das zweite Solenoidventil (11) und das dritte Solenoidventil (12) in der Hydraulikstation (16) und die elektromagnetische Bremse (17) in dem Giermotor (4) alle nicht mit Energie versorgt, und ein Druck der Hydraulikbremse (5) fällt auf die durch das Ausgleichsventil (14) eingestellte Entlastung, wobei in diesem Moment die Windkraftanlage in dem passiven Gierzustand mit Dämpfung arbeitet.

## Revendications

1. Procédé de commande d'un système de freinage en lacet dans une éolienne, dans lequel le système de freinage en lacet dans l'éolienne comprend un système de freinage hydraulique et un système de freinage électromagnétique ; dans lequel le système de freinage hydraulique comprend une station hydraulique (16), une canalisation (10) et un frein hydraulique (5) qui est installé sur une plaque de fond de nacelle (1) de l'éolienne et est en contact avec un disque de frein de lacet (6) relié par des boulons à une bague avec des engrenages (2.2) d'un palier de lacet (2) et une bride supérieure de tour (7), le frein hydraulique (5) étant capable de serrer le disque de frein de lacet (6) sous pression pour permettre le freinage en lacet d'une tête de l'éolienne ; dans lequel la plaque de fond de nacelle (1) est reliée par des boulons à une bague sans engrenage du palier de lacet (2), et le frein hydraulique (5) est relié à la station hydraulique (16) via la canalisation (10) ; et dans lequel le système de freinage électromagnétique comprend un moteur de lacet (4), un réducteur de lacet (3) et un frein électromagnétique (17), dans lequel le frein électromagnétique (17) est installé à l'intérieur du moteur de lacet (17) pour permettre le freinage du rotor dans le moteur de lacet (17), un arbre de sortie de moteur de lacet est relié à un arbre d'entrée du réducteur de lacet (3), et un engrenage de sortie du réducteur de lacet (3) est en prise avec une bague d'engrenage du palier de lacet (2) ;
dans lequel la station hydraulique (16) comprend un clapet anti-retour (8), une première électrovanne (9), un réservoir d'huile (15), et plusieurs circuits entre une sortie d'huile de frein hydraulique et le réservoir d'huile (15), dans lequel de l'huile sous pression s'écoule d'une pompe hydraulique vers le clapet anti-retour (8) et vers la première électrovanne (9) en séquence, et entre finalement dans le frein hydraulique (5) ; parmi les plusieurs circuits situés entre la sortie d'huile de frein hydraulique et le réservoir d'huile (15), un seul circuit équipé d'une vanne d'équilibrage (14) peut déborder en cas de mise hors tension, et le circuit équipé de la vanne d'équilibrage (14) comporte également une troisième électrovanne (12) agencée à l'intérieur, dans lequel la décharge de consigne de la vanne d'équilibrage (14) est inférieure à une pression de freinage appliquée par le système de freinage hydraulique de l'éolienne en fonctionnement normal ; d'autres circuits comportent des deuxièmes électrovannes (11) agencées à l'intérieur ; dans lequel le système de freinage hydraulique comprend en outre un accumulateur (13) commandé par l'électrovanne qui est en communication fluidique avec le frein hydraulique (5) en cas de mise hors tension de la station hydraulique, garantissant ainsi que le système de freinage reste à basse pression lorsque de l'énergie est perdue ;
dans lequel le frein électromagnétique (17) installé dans le moteur de lacet (4) est normalement ouvert, le frein électromagnétique (17) installé dans le moteur de lacet (4) étant dans un état de freinage lorsqu'il est sous tension, et le frein est desserré lorsqu'il est hors tension ;
dans lequel le frein électromagnétique (17) comprend une culasse (17.1), une bobine (17.2), une plaque de friction (17.3), une plaque d'armature (17.4), un shrapnel (17.5) et une came d'armature (17.6), dans lequel la came d'armature (17.6) est reliée à l'arbre de rotor de moteur (18) par l'intermédiaire d'une clavette d'arbre, la plaque d'armature (17.4) est intégrée à la came d'armature (17.6) par l'intermédiaire du shrapnel (17.5), la bobine (17.2) est située à l'intérieur de la culasse (17.1), et la plaque de friction (17.3) est située entre la bobine (17.2) et la plaque d'armature (17.4) ; lorsque le frein électromagnétique (17) est alimenté en énergie, la bobine (17.2) est sous tension pour tirer la plaque d'armature (17.4) qui surmonte alors une force élastique du shrapnel (17.5) pour entrer en contact avec la plaque de friction (17.3) pour un freinage ;
dans lequel le procédé de commande comprend :
à une étape 1, déterminer si l'éolienne fonctionne dans des conditions de tempête, et si tel est le cas, de passer à une étape 2 pour entrer dans un mode de commande en tempête ;
à l'étape 2, l'arrêt de la production d'énergie par l'éolienne, et avant qu'une valeur de câble tordu ne dépasse la limite, l'éolienne va détordre le câble à l'avance et effectuer un lacet sous le vent ;
dans lequel, à l'étape 2, l'éolienne qui effectue une détorsion à l'avance adopte un procédé de « minimum de lacet sous le vent du câble tordu », et le procédé de commande permet en outre de :
2-1) Obtenir un angle de torsion actuel du câble α et un angle de déviation β entre la tête et une direction du vent, dans lequel l'angle de torsion actuel du câble α a un symbole signe, une valeur de torsion négative du câble à gauche indique un lacet à droite dans une direction de détorsion, une valeur de torsion positive du câble à droite indique un lacet à gauche dans la direction de détorsion, et l'angle de déviation β entre la tête et la direction du vent définit un angle de rotation, qui est positif sans symbole signe, requis si la tête tourne dans le sens des aiguilles d'une montre pour atteindre une même direction que la direction du vent ;
2-2) déterminer si l'expression |*α* + *β*| > |*α* - (360-*β*)| est vraie, et si tel est le cas, le lacet va vers la gauche de |*α*-(360-*β*)| degrés, ou sinon va vers la droite de |*α*+*β*| degrés ;
2-3) arrêter le lacet lors de la détection pendant le lacet que la valeur de l'angle de déviation β est inférieure à un écart d'angle de lacet minimum admissible A et que l'angle de torsion actuel du câble α≤180 ;
à une étape 3, le fait de déterminer si une connexion au réseau électrique est perdue, si la connexion au réseau électrique n'est pas perdue, de passer à une étape 4, et si la connexion au réseau électrique est perdue, de passer à une étape 5 ;
à l'étape 4, l'éolienne démarre un lacet sous le vent actif, et maintient la tête dans une même direction que la direction du vent ;
à l'étape 5, l'éolienne adopte un mode de freinage hors alimentation et entre dans un lacet passif avec amortissement.

2. Procédé de commande du système de freinage en lacet de l'éolienne selon la revendication 1 dans lequel, à l'étape 1, il est déterminé d'entrer dans le mode de commande en tempête lors de l'entrée manuelle dans le mode de commande en tempête ou lors de la détermination qu'une vitesse du vent dépasse une valeur S au cours d'un temps T.

3. Procédé de commande du système de freinage en lacet de l'éolienne selon la revendication 1 dans lequel, à l'étape 5, lorsque la connexion au réseau électrique est perdue, la première électrovanne (8), la deuxième électrovanne (11) et la troisième électrovanne (12) dans la station hydraulique (16) et le frein électromagnétique (17) dans le moteur de lacet (4) sont alimentés par une alimentation sans interruption peu de temps après la perte de connexion au réseau électrique pour maintenir leurs états d'origine ; si la durée de perte de connexion au réseau électrique dépasse une valeur de consigne Td, la première électrovanne (8), la deuxième électrovanne (11) et la troisième électrovanne (12) dans la station hydraulique (16) et le frein électromagnétique (17) dans le moteur de lacet (17) vont être tous mis hors tension, et une pression du frein hydraulique (5) chute jusqu'à la décharge établie par la vanne d'équilibrage (14), à ce moment, l'éolienne fonctionne dans l'état de lacet passif avec amortissement.
